# EUROPEAN PATENT SPECIFICATION

(11) **EP 3 880 974 B1**
(45) Date of publication and mention of the grant of the patent: **23.08.2023**
(21) Application number: 19808983.1
(22) Date of filing: 12.11.2019
(51) Int. Cl.: F04D 29/70, B01D 45/06

(54) **INERTIAL FILTER FOR AN INTEGRATED MOTOR COMPRESSOR UNIT**
TRÄGHEITSFILTER FÜR EINE INTEGRIERTE MOTOR VERDICHTER EINHEIT
FILTRE INERTIEL POUR UNE UNITÉ MOTEUR COMPRESSEUR INTÉGRÉE

(30) Priority: 13.11.2018 FR 1860462
(43) Date of publication of application: 22.09.2021
(73) Proprietor: Thermodyn SAS, 71200 Le Creusot (FR)
(72) Inventor: GUILLEMIN, Sylvain, 71200 Le Creusot (FR)
(74) Representative: Novagraaf Group
(86) International application number: PCT/EP2019/025396
(87) International publication number: WO 2020/098971

(56) References cited:
- EP-A1- 0 972 573
- WO-A1-2011/058037
- US-A1- 2006 045 764
- US-B2- 8 679 210

## Description

### BACKGROUND OF THE INVENTION

The field of the present invention relates to a filtration device for removing undesirable particles from a gas used to cool an integrated motor compressor unit, and further relates to an integrated motor compressor unit ("IMC unit") comprising a filtration device of this type.

US 2006/045764 A1 discloses a compressor stage separation system.

In general, a motor compressor unit comprises a centrifugal compressor and a motor integrated in a housing.

A centrifugal compressor generally comprises a plurality of compression stages which are adapted to compress a gas from an inlet to an outlet by a plurality of blades mounted on a driven shaft which is coupled to a motor-driven rotor to generate a flow of compressed gas. The rotary shaft is mounted in the integrated motor compressor unit via bearings. These bearings may for example be active magnetic bearings ("AMB").

The shaft used to directly drive a centrifugal compressor of this type must rotate at relatively high speeds (for example 18,000 rpm) which generates heat in the bearings. If this heat is not dissipated appropriately, it may have adverse effects on the bearing systems and cause deterioration or failure of the bearings.

To regulate the heat and cool the bearings, it is known to use a cooling circuit that can be open-loop or closed, in which cooling gas is extracted from the process flow, for example at the outlet of the first compression stage. The gas is then circulated through the motor and the bearings to absorb heat.

For example, about 10% of gas is supplied to the cooling circuit from the flow. The cooling gas may be driven by a pressure difference between the source of the cooling gas and the point at which the gas can flow.

The bearings are often highly sensitive as to the quality of the gas that cools them. In particular, when the bearings are of the AMB type, large solid particles may act inappropriately towards the magnetic suspension of the rotary shaft. It is necessary to use a filtration system to filter the gas and thereby remove undesirable solid particles, for example particles larger than 3 microns.

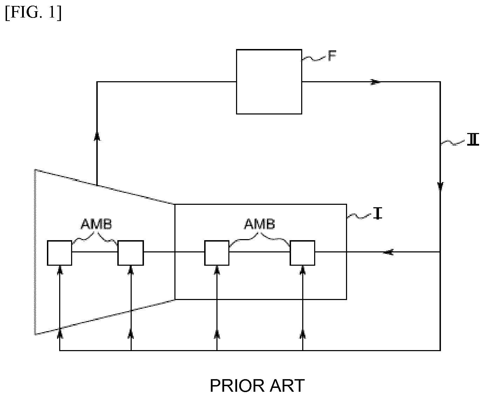

A commonly used solution shown in FIG. 1, which illustrates a motor compressor unit I with its cooling loop II, is to filter the entire gas flow of the cooling loop by placing at least one filter F, located in the cooling loop, in front of the inlet of the cooling gas flowing in the AMB bearings, located centrally, and in the motor. In the example shown, a filter sized for 100% of the gas flow is necessary to remove a sufficient quantity of undesirable particles from the gas, before they enter the AMB bearings, and to obtain sufficient reliability of the level of filtration that can be achieved, which increases costs, size and energy consumption. In addition, each filter F requires periodic interventions in terms of maintenance and control, because this type of filter F becomes dirty during its use. Thus, the more intense the use of the filters F, the more the necessary maintenance is important and the more one should expect shutdowns of the IMC unit.

### BRIEF DESCRIPTION

Embodiments of the filtration cartridge for an integrated motor compressor unit ("IMC") described herein are intended to avoid at least some of the aforementioned drawbacks. A particular advantage of the described embodiments is to eliminate some or all of the need for a filter and to reduce the required maintenance.

### SUMMARY OF THE INVENTION

The present invention is defined in the accompanying claims.

The aforementioned objectives of the present invention are achieved by means of a filtration device which is intended to filter a cooling gas, namely to capture particles whose size exceeds a certain dimension and which could be mixed with the cooling gas, and which is removably installed on the housing of an integrated compressor unit and which includes:
an outer housing having an inner cylindrical wall,
an inner cartridge having an outer cylindrical wall and an inner passage for a filtered gas, the inner cartridge being mounted in the outer housing and defining therewith a duct located between an inlet for the cooling gas and a first outlet for the trapped particles,
the inner cartridge having an assembly of at least a second filter outlet extending between the duct and the inner passage and between the inlet and the first outlet.

Thus, a particle trap is provided in the duct in which the gas flows. According to one embodiment, the gas may be filtered before being used to cool the active magnetic bearings ("AMBs") for carrying a rotary shaft of the integrated compressor unit, thereby preventing premature wear or failure of the AMB bearings, while reducing or avoiding the need for a filter.

Advantageously, each second outlet has an axis extending upstream, from the point of view of a flow of cooling gas.

Thus, the largest undesirable particles cannot enter the second outlet and are therefore caused to fall toward the first outlet.

Advantageously, there is provided a pair of second opposite outlets.

Thus, the gas flow is divided into two streams flowing in opposite directions in the duct, the streams meeting above the first outlet and creating a turbulent zone in which the larger particles are trapped.

Advantageously, the direction of the second outlet is between 135° and 170° with respect to the downstream direction of the cooling gas flow from the inlet.

Each second outlet may have a filter, so that the filtering effect of the device is completed along the flow of gas through each second outlet.

Advantageously, a container is connected to the first outlet and is adapted to collect the trapped particles.

According to one embodiment, there is provided means for controlling the opening of the first outlet.

According to the invention, the inner wall has a flat portion facing the first outlet.

Thus, the cross section of the duct increases abruptly, causing a gas pressure drop and increasing trapping undesirable particles in the turbulent zone.

Advantageously, the filtration device constitutes a support for an active magnetic bearing.

### BRIEF DESCRIPTION OF THE DRAWINGS

Other objects, features and advantages of embodiments of the present invention will be better understood from a detailed study of the following description, which is provided solely by way of non-limiting example, and with reference to the accompanying drawings in which
[FIG. 1] schematically shows a cartridge filtration according to the current state of the art;
[FIG. 2] schematically shows a cross-section of the filter device according to a first embodiment of the present invention;
[FIG. 3] schematically shows a cross-section of the filter device of FIG. 2, further comprising optional cartridge filters;
[FIG. 4] is a perspective view of the inner cartridge alone of the filter device, according to the embodiment of FIG. 2; and
[FIG. 5] schematically shows an integrated motor compressor unit comprising the filtration device of FIG. 2.

### DETAILED DESCRIPTION

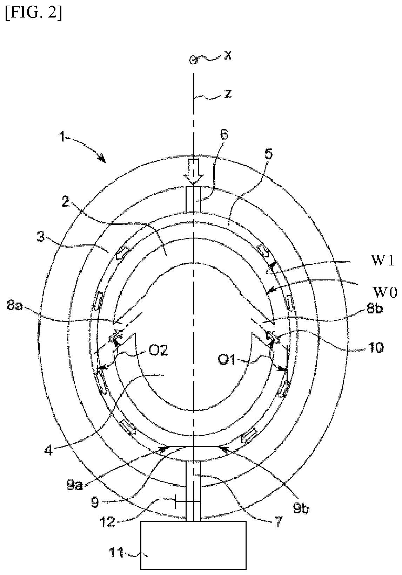

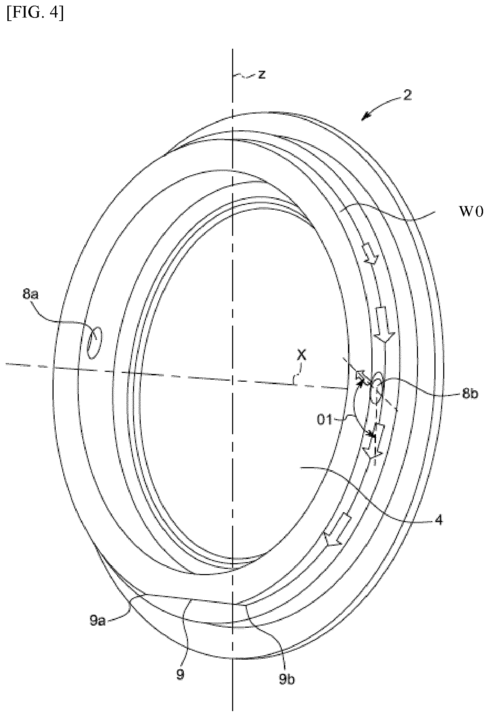

FIGS. 2, 3 and 4 schematically show a filtration device 1 in which a cooling gas is circulated and subjected to filtration. In the illustrated embodiment, the filtration device 1 is intended to be placed before the arrival of the cooling gas on the active magnetic bearings ("AMB"), in order to protect them. However, a filtration device of this type can be used to filter the cooling gases of any type of rotary element of an integrated motor compressor unit ("IMC unit"). The cooling gas may, for example, be natural gas or a mixture of gases such as air, composed of undesirable particles or comprising such particles. In these gases, polluting particles of different kinds can be dispersed. For example, impurities such as metal particles, rust particles, condensation, water droplets or oil droplets may float in the gas due to corrosion or mechanical deterioration of the components of the IMC unit during its normal operation. The filtration device makes it possible to trap the largest of these undesirable particles, for example having sizes of between 3 microns and 10 microns. When the gas has an excessive quantity of these undesirable large polluting solid particles, the operation of the AMB bearings can be disturbed. It is because they rotate and are sensitive to clogging, blockage or even scratches that AMB bearings are threatened when the gas circulates to cool them.

As shown in FIGs. 2, 3 and 4, the filtration device 1 comprises an inner cartridge 2 forming an inner AMB bearing support ring, namely an AMB support ring, assembled in an outer housing 3 corresponding to at least a portion of the IMC unit, for example the motor housing of the IMC unit. The inner cartridge 2 may be designed to fit one or more other portions of the IMC unit, for example, the bearing supports. For example, the inner cartridge 2 can be screwed onto the housing of the IMC. The inner cartridge 2 has an outer cylindrical wall W0 and an inner passage 4 for the filtered cooling gas. The AMB bearings to be cooled are connected to the inner passage 4 which is located in the central region of the filtration device 1.

The outer housing 3 comprises a cylindrical inner wall W1. The outer cylindrical wall W0 is enclosed in the cylindrical inner wall W1. The inner and outer cylindrical walls extend along the same longitudinal axis X, defining a duct 5 between them, in which the gas can circulate.

The duct 5 is located between an inlet 6 for the cooling gas and a first outlet 7 for the trapped particles. The duct 5 may correspond substantially to a tubular space. In the embodiment of FIG. 2, this tubular space has approximately an ovoid shape, brought to a cross-sectional plane, with a longer axis corresponding to a vertical ascending axis Z. With respect to the vertical ascending axis 3, the duct 5 has a maximum height (a top) and a minimum height (a bottom) as shown in FIG. 2.

The duct 5 is hermetic with respect to the gas particles, so that the gas in the duct 5 can flow only in the duct 5.

The inlet 6 comprises at least one hole which passes through the outer housing 3 to allow the cooling gas to enter the duct 5. The inlet 6 may, for example, be equipped with a nozzle, a tube and/or a valve to allow the gas to enter, for example, by means of a compressor.

The first outlet 7 comprises at least one hole passing through the outer housing 3 from the duct 5.

Advantageously, the inlet 6 is located as close as possible to the top of the duct 5. The fact of providing an inlet 6 high up makes it possible to lengthen the trajectory of the particles in the duct 5 in which they are filtered. An inlet 6 located at a higher position also facilitates the trapping of large particles by virtue of gravity, since this makes it possible to obtain a longer path of gas in the duct 5. Likewise, it is thus possible to obtain a filtration device 1 with vertical symmetry.

It is advantageous that the first outlet 7 is located substantially around the bottom of the duct 5 where the turbulence of the flow is formed and where the undesirable particles are trapped.

Advantageously, the inner cartridge 2 comprises a set of at least one second filtering outlet 8a, 8b. Each second outlet 8a, 8b is provided to pass through the inner cartridge 2, allowing the gas contained in the duct 5 to reach the inner passage 4. The gas can circulate only from the inlet 6 to the first outlet 7 or as far as at the second outlet 8a, 8b, at least one, through the duct 5.

According to a first embodiment, the filtration effect acts in the duct 5 filled with gas, before the gas passes through the second outlet 8a, 8b. The objective is to ensure that a maximum of undesirable particles fall under the effect of gravity towards the first outlet 7 and to trap them therein, in particular by creating a zone of turbulence of the gas flow, just above the first outlet 7, which prevents the particles from rising again to the second outlet 8a, 8b.

Each second outlet 8a, 8b is arranged at an intermediate location between the inlet 6 and the first outlet 7 of the duct 5 and constitutes a singularity which causes a point pressure drop in the gas flow, due to the narrowing of the second outlet 8a, 8b with respect to the diameter of the duct 5. The flow in the second outlet 8a, 8b may be lower than in the duct 5, in order to reduce to a minimum the suction of the undesirable particles in the gas flow entering the second outlet 8a, 8b.

The gas velocity at the inlet 6 and the locations of the second outlet 8a, 8b are chosen so that most of the undesirable particles pass in front of the second outlet 8a, 8b, without entering it, that is to say, with a speed high enough to withstand the local pressure drop, and go down in the duct 5 until reaching the first outlet 7 where the particle trap is located.

As shown in FIG. 2, the second outlet 8a, 8b passes through the inner cartridge 2, from a through hole having an inlet on the outer cylindrical wall W0 and an outlet on the inner passage 4. Advantageously, the outlet is arranged at a greater height than the inlet with respect to the vertical ascending axis Z. In other words, the gas flow turns off at the second outlet 8a, 8b, and a portion of the gas rises, i.e. it flows upstream, through the second outlet 8a, 8b. The angle O1, O2 between the axis of the through hole and the vertical axis must be chosen to be at least greater than 90°, if possible, with an acute angle of between 135° and 170°, to maximize the pressure drop and thus prevent large particles from entering the second outlet 8a, 8b.

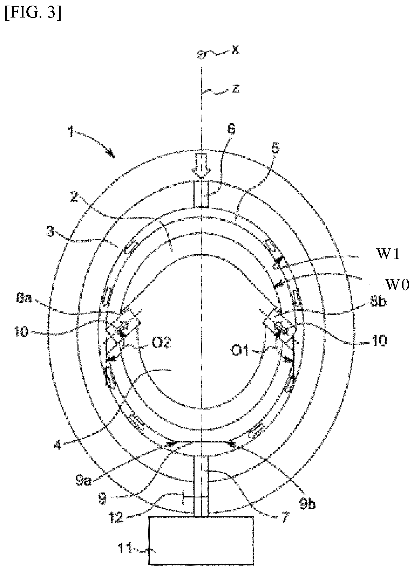

An advantageous embodiment provides two second outlets 8a, 8b which both lead to the inner passage 4, through the inner cartridge 2 and from the duct 5, each of the outlets being located substantially in symmetry with each other, with respect to the vertical ascending axis Z. Advantageously, the second outlets 8a, 8b are substantially identical and arranged symmetrically at the same height between the duct 5 and the inner passage 4 and between the inlet 6 and the first outlet 7. It is advantageous that the second outlets 8a, 8b are oriented similarly upwards, with an axis extending upstream, with angles O1, O2 symmetrical with respect to the vertical axis Z. Advantageously, the cooling gas stream arriving from the inlet 6 is divided into two streams, as shown in FIGS. 2 and 3, towards each of the second outlets 8a, 8b. In each stream, the gas particles travel substantially half of the total length of the duct 5, because the two opposite streams meet when they reach the bottom of the duct 5, arriving from two opposite directions. Each of the two opposite streams prevents the other from going much further than half of the duct 5 and then back up to the second opposite outlet 8a, 8b. The presence of two symmetrical flows creates a turbulence point at the bottom of the duct 5, above the first outlet 7. This prevents undesirable particles from bouncing back up to one of the second outlets 8a, 8b. Each second outlet 8a, 8b may be placed as close as possible to the inlet 6 to prevent the return of the undesirable particles, especially in the case of inlet flow at high speed. However, because of their direction necessarily oriented upward, each second outlet 8a, 8b is positioned by taking into consideration the curvature of the inner cylindrical wall W1.

According to another embodiment, the outer cylindrical wall W0 comprises a flat portion 9 which faces the first outlet. As shown in FIGs. 2, 3 and 4, this flat portion 9 may, for example, be provided substantially horizontally on the outer cylindrical wall W0 and just above the first outlet 7. The flat portion 9 has two sharp edges 9a, 9b constituting discontinuities inside the duct 5, on the outer cylindrical wall W0 along which the gas flows. As shown in FIG. 2, the flat portion 9 also creates a widening of the duct 5. The streams of gas that meet in front of this widening and between the two sharp edges 9a, 9b of the flat portion will naturally create a turbulent flow. It is in this turbulent flow that the larger particles quickly lose their kinetic energy and eventually fall down under the effect of gravity. For this reason, the flat portion 9 is arranged as an obstacle to the vertical ascent of the particles and retains the largest particles.

Thanks to the filtration device 1 which is shown, described and claimed here, the undesirable particles can then be trapped by modulating several parameters which may, by way of non-limiting example, be the speed of the inlet gas flow, the angles O1, O2 of the second outlets, the length of the flat portion 9 and the sharpness of the edges 9a, 9b of the flat portion.

According to another embodiment shown in FIG. 3, a filter cartridge 10 is inserted into each second outlet 8a, 8b. Such a filter cartridge 10 may also, for example, be inserted into the duct 5, along the inner cylindrical wall or the outer wall W0. This filter may, for example, be a coalescing filter cartridge 10 adapted to naturally trap particles of the desired size, for example greater than 3 microns.

According to another embodiment, there is provided a container 11 which is connected to the first outlet 7. This container 11 makes it possible to collect the trapped particles which may accumulate in an underlying layer, at the bottom of the duct 5, under the effect of gravity, and eventually form a layer of sediment around the lower part of the duct 5 where they concentrate.

Control means 12 for opening the first outlet 7 may further be provided to facilitate the evacuation of the trapped particles, for example during a maintenance period. The control means 12 may, for example, comprise a valve and a tube for connecting the duct 5, for example, to the container 11 or to separate it from it.

In addition, the inner and outer cylindrical walls may, for example, be designed with specific shapes that are adapted to increase the cross section of the duct 5, along a circumference of the outer cylindrical wall W0 and from the inlet 6 to the first outlet 7. In other words, the inner and outer walls may have specific shapes, adapted so that the distance between them increases downward. For example, the diameter of the duct 5 may increase from the top to the bottom of the duct 5. This would allow the gas to expand gradually towards the outlets 7, 8a, 8b and, at the same time, the particles to slow down slightly. This widening of the duct 5, as well as the presence of the first outlet 7 and the flat portion 9, tend to divert and slow the flow of the fluid and to facilitate the fall of the larger particles downward, under the effect of gravity, to thereby improve the trapping of undesirable particles through the first outlet 7.

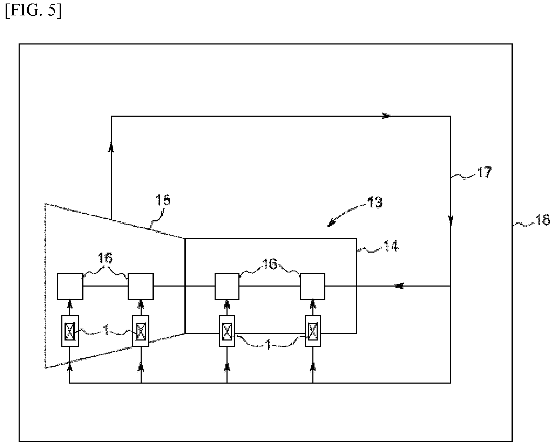

Reference will now be made to FIG. 5, which schematically represents a motor compressor unit equipped with the filtration device 1 disclosed above. As shown, the motor compressor unit designated by the reference 13 comprises an electric motor 14 and a compressor 15 having at least one compression stage 15 mounted on a shaft driven by a motor rotor. The driven shaft and the rotor are each supported by a pair of AMB bearings 16.

The AMB bearings 16 and the motor are cooled by means of a cooling loop 17 in which the cooling gas is taken from the flow of the process, in the first compression stage 15. Most of the cooling gas circulates in the electric rotary motor 14, and the rest of the gas flows in the direction of the AMB 16. At least one filtration device 1, as described above, can be assembled on the motor housing 18 of the motor compressor unit 13 and be placed in front of each arrival of the cooling gas on an AMB 16. A filtration device 1 of this type is then sized for a minor portion of the cooling gas flow.

## Claims

1. A filtration device (1) configured for filtering a cooling gas associated with an integrated compressor unit (13), wherein the filtration device comprises:
- an outer housing (3) having an inner cylindrical wall (W1) extending along a longitudinal axis (X),
- an inner cartridge (2) having an outer cylindrical wall (W0) extending along the longitudinal axis (X) and an inner passage (4) for a filtered gas, the inner cartridge being mounted in the outer housing (3) and defining therewith in a cross sectional plane orthogonal to the longitudinal axis (X) a duct (5) dividing the gas flow into two streams flowing in opposite directions, the duct (5) being located between an inlet (6) for the cooling gas and a first outlet (7) for trapped particles, the inlet (6) and first outlet (7) each comprising at least one hole passing through the outer housing (3),
the inner cartridge (2) having an assembly of at least one second filtering outlet (8a, 8b) extending from the duct (5) and leading to the inner passage (4) and arranged between the inlet (6) and the first outlet (7),
**characterized in that**
outer wall (W0) has a flat portion (9) facing the first outlet (7).

2. The filtration device (1) according to claim 1, **characterized in that** each second outlet (8a, 8b) comprises an axis extending upstream, from the point of view of a cooling gas flow in the duct (5).

3. The filtration device (1) according to any one of the preceding claims, **characterized in that** it comprises a pair of opposite second outlets (8a, 8b).

4. The filtration device (1) according to any one of the preceding claims, **characterized in that** the direction of the second outlet (8a, 8b) is between 135° and 170° with respect to the downstream direction of the cooling gas flow in the duct (5) from the inlet (6).

5. The filtration device (1) according to any one of the preceding claims, **characterized in that** each second outlet (8a, 8b) comprises a filter cartridge (10).

6. The filtration device (1) according to any one of the preceding claims, **characterized in that** it further comprises a container (11) connected to the first outlet (7) and adapted to collect the trapped particles.

7. The filtration device (1) according to any one of the preceding claims, **characterized in that** it further comprises a means (12) for controlling the opening of the first outlet (7).

8. The filtration device (1) according to any one of the preceding claims, **characterized in that** the filtration device (1) forms a support for an active magnetic bearing.

9. An integrated compressor unit (13), comprising:
• a motor housing (18),
• a compression stage (15) passing through the motor housing (18) and adapted to compress a gas from an inlet to an outlet, the gas having a first particle with a first size and a second particle with a second size which is greater than the first size of the first particle, the compression stage (15) comprising:
- a compressor,
- a rotary electric motor (14) coupled to the compressor and comprising a rotary shaft assembled into the integrated motor compressor unit (13), by means of active magnetic bearings (16),
• a cooling circuit (17) configured for cooling the active magnetic bearings (16) using the outlet gas delivered by the outlet of the compression stage (15),
the integrated compressor unit further comprising a filtration device (1) according to any one of claims 1 to 8, which is removably mounted on the motor housing (18).

## Patentansprüche

1. Filtrationsvorrichtung (1), die zum Filtern eines Kühlgases, das einer integrierten Kompressoreinheit (13) zugeordnet ist, konfiguriert ist, wobei die Filtrationsvorrichtung umfasst:
- ein äußeres Gehäuse (3), das eine innere zylindrische Wand (W1) aufweist, die sich entlang einer Längsachse (X) erstreckt,
- eine innere Kartusche (2), die eine äußere zylindrische Wand (W0), die sich entlang der Längsachse (X) erstreckt, und einen inneren Durchgang (4) für ein gefiltertes Gas aufweist, wobei die innere Kartusche in dem äußeren Gehäuse (3) montiert ist und in einer Querschnittsebene orthogonal zu der Längsachse (X) einen Kanal (5) damit definiert, der den Gasdurchfluss in zwei Ströme, die in entgegengesetzte Richtungen fließen, teilt, wobei der Kanal (5) zwischen einem Einlass (6) für das Kühlgas und einem ersten Auslass (7) für eingefangene Partikel gelegen ist, der Einlass (6) und der erste Auslass (7) jeweils umfassend mindestens ein Loch, das durch das äußere Gehäuse (3) verläuft,
wobei die innere Kartusche (2) eine Baugruppe von mindestens einem zweiten Filterauslass (8a, 8b) aufweist, der sich von dem Kanal (5) erstreckt und zu dem inneren Durchgang (4) führt und zwischen dem Einlass (6) und dem ersten Auslass (7) eingerichtet ist, **dadurch gekennzeichnet, dass** die äußere Wand (W0) einen flachen Abschnitt (9) aufweist, der dem ersten Auslass (7) zugewandt ist.

2. Filtrationsvorrichtung (1) nach Anspruch 1, **dadurch gekennzeichnet, dass** jeder zweite Auslass (8a, 8b) eine Achse umfasst, die sich aus der Sicht eines Kühlgasdurchflusses in dem Kanal (5) stromaufwärts erstreckt.

3. Filtrationsvorrichtung (1) nach einem der vorstehenden Ansprüche,
**dadurch gekennzeichnet, dass** sie ein Paar entgegengesetzter zweiter Auslässe (8a, 8b) umfasst.

4. Filtrationsvorrichtung (1) nach einem der vorstehenden Ansprüche,
**dadurch gekennzeichnet, dass** die Richtung des zweiten Auslasses (8a, 8b) zwischen 135° und 170° in Bezug auf die stromabwärtige Richtung des Kühlgasdurchflusses in dem Kanal (5) von dem Einlass (6) liegt.

5. Filtrationsvorrichtung (1) nach einem der vorstehenden Ansprüche,
**dadurch gekennzeichnet, dass** jeder zweite Auslass (8a, 8b) eine Filterkartusche (10) umfasst.

6. Filtrationsvorrichtung (1) nach einem der vorstehenden Ansprüche,
**dadurch gekennzeichnet, dass** sie ferner einen Behälter (11) umfasst, der mit dem ersten Auslass (7) verbunden und angepasst ist, um die eingefangenen Partikel zu sammeln.

7. Filtrationsvorrichtung (1) nach einem der vorstehenden Ansprüche,
**dadurch gekennzeichnet, dass** sie ferner ein Mittel (12) zum Steuern der Öffnung des ersten Auslasses (7) umfasst.

8. Filtrationsvorrichtung (1) nach einem der vorstehenden Ansprüche,
**dadurch gekennzeichnet, dass** die Filtrationsvorrichtung (1) einen Träger für ein aktives Magnetlager ausbildet.

9. Integrierte Kompressoreinheit (13), umfassend:
• ein Motorgehäuse (18),
• eine Kompressionsstufe (15), die durch das Motorgehäuse (18) verläuft und angepasst ist, um ein Gas von einem Einlass zu einem Auslass zu komprimieren, wobei das Gas ein erstes Partikel mit einer ersten Größe und ein zweites Partikel mit einer zweiten Größe aufweist, die größer als die erste Größe des ersten Partikels ist, die Kompressionsstufe (15) umfassend:
- einen Kompressor,
- einen rotierenden Elektromotor (14), der mit dem Kompressor gekoppelt ist und umfassend eine rotierende Welle, die in die integrierte Motorkompressoreinheit (13) mittels aktiver Magnetlager (16) eingebaut ist,
• einen Kühlkreislauf (17), der zum Kühlen der aktiven Magnetlager (16) unter Verwendung des Auslassgases, das durch den Auslass der Kompressionsstufe (15) abgegeben wird, konfiguriert ist,
die integrierte Kompressoreinheit ferner umfassend eine Filtrationsvorrichtung (1) nach einem der Ansprüche 1 bis 8, die an dem Motorgehäuse (18) abnehmbar angebracht ist.

## Revendications

1. Dispositif de filtration (1) conçu pour une filtration d'un gaz de refroidissement associé à un groupe compresseur intégré (13), dans lequel le dispositif de filtration comprend :
- un boîtier externe (3) ayant une paroi cylindrique interne (W1) s'étendant le long d'un axe longitudinal (X),
- une cartouche interne (2) ayant une paroi cylindrique externe (W0) s'étendant le long de l'axe longitudinal (X) et un passage interne (4) pour un gaz filtré, la cartouche interne étant montée dans le boîtier externe (3) et définissant avec celui-ci dans un plan en section transversale orthogonal à l'axe longitudinal (X) un conduit (5) divisant l'écoulement de gaz en deux flux s'écoulant dans des directions opposées, le conduit (5) étant situé entre une entrée (6) pour le gaz de refroidissement et une première sortie (7) pour des particules piégées, l'entrée (6) et première sortie (7) comprenant chacune au moins un trou traversant le boîtier externe (3),
la cartouche interne (2) ayant un ensemble d'au moins une seconde sortie de filtration (8a, 8b) s'étendant depuis le conduit (5) et menant au passage interne (4) et agencé entre l'entrée (6) et la première sortie (7),
**caractérisé en ce que** la paroi externe (W0) a une partie plate (9) faisant face vers la première sortie (7).

2. Dispositif de filtration (1) selon la revendication 1, **caractérisé en ce que** chaque seconde sortie (8a, 8b) comprend un axe s'étendant en amont, depuis le point de vue d'un écoulement de gaz de refroidissement dans le conduit (5).

3. Dispositif de filtration (1) selon l'une quelconque des revendications précédentes, **caractérisé en ce qu'**il comprend une paire de secondes sorties opposées (8a, 8b).

4. Dispositif de filtration (1) selon l'une quelconque des revendications précédentes, **caractérisé en ce que** la direction de la seconde sortie (8a, 8b) est entre 135° et 170° par rapport à la direction aval de l'écoulement de gaz de refroidissement dans le conduit (5) depuis l'entrée (6).

5. Dispositif de filtration (1) selon l'une quelconque des revendications précédentes, **caractérisé en ce que** chaque seconde sortie (8a, 8b) comprend une cartouche de filtre (10).

6. Dispositif de filtration (1) selon l'une quelconque des revendications précédentes, **caractérisé en ce qu'**il comprend en outre un récipient (11) raccordé à la première sortie (7) et adapté pour collecter les particules piégées.

7. Dispositif de filtration (1) selon l'une quelconque des revendications précédentes, **caractérisé en ce qu'**il comprend en outre un moyen (12) pour la commande de l'ouverture de la première sortie (7).

8. Dispositif de filtration (1) selon l'une quelconque des revendications précédentes, **caractérisé en ce que** le dispositif de filtration (1) forme un support pour un palier magnétique actif.

9. Groupe compresseur intégré (13), comprenant :
• un boîtier de moteur (18),
• un étage de compression (15) traversant le boîtier de moteur (18) et adapté pour comprimer un gaz depuis une entrée vers une sortie, le gaz ayant une première particule avec une première taille et une seconde particule avec une seconde taille qui est supérieure à la première taille de la première particule, l'étage de compression (15) comprenant :
± un compresseur,
± un moteur électrique rotatif (14) accouplé au compresseur et comprenant un arbre rotatif assemblé dans l'unité de compresseur de moteur intégré (13), au moyen de paliers magnétiques actifs (16),
• un circuit de refroidissement (17) conçu pour un refroidissement des paliers magnétiques actifs (16) à l'aide du gaz de sortie délivré par la sortie de l'étage de compression (15),
le groupe compresseur intégré comprenant en outre un dispositif de filtration (1) selon l'une quelconque des revendications 1 à 8 qui est monté de manière amovible sur le boîtier de moteur (18).
